# FASCICULE DE BREVET EUROPEEN

(11) **EP 0 814 338 B1**
(45) Date de publication et mention de la délivrance du brevet: **27.08.2003**
(21) Numéro de dépôt: 97401402.9
(22) Date de dépôt: 18.06.1997
(51) Int. Cl.: G01P 3/44, G01P 3/487

(54) **Roulement d'orientation à capteur intégré**
Schwenkkugellager mit eingebautem Messaufnehmer
Swivel roller bearing with integrated sensor

(30) Priorité: 21.06.1996 FR 9607768
(43) Date de publication de la demande: 29.12.1997
(73) Titulaire: RKS S.A., 89204 Avallon (FR)
(72) Inventeur: Bourgeois-Jacquet, Pierre, 89200 Avallon (FR)
(74) Mandataire: Casalonga, Axel

(56) Documents cités:
- EP-A- 0 320 322
- DE-A- 2 403 854
- FR-A- 2 128 827
- US-A- 4 861 171
- PATENT ABSTRACTS OF JAPAN vol. 7, no. 6 (P-167) [1151] , 11 janvier 1983 & JP 57 163868 A (NISSAN JIDOSHA), 8 octobre 1982,

## Description

La présente invention concerne un roulement d'orientation du type capable d'assurer la rotation d'une partie mobile par rapport à une partie fixe. La partie fixe peut être par exemple la coque d'un navire, le châssis d'un véhicule terrestre tel qu'un char de combat, ou encore la partie inférieure d'une grue à tour. La partie mobile sert de support aux équipements nécessitant une orientation angulaire, par exemple la tourelle du char ou la partie supérieure de la grue à tour. Un roulement d'orientation comprenant une partie tournante, une partie non tournante et plusieurs rangées de rouleaux cylindriques est décrit par le document US-A-4 861 171.

Dans ces différentes applications, le besoin est apparu de connaître de façon précise, la position et/ou la vitesse angulaire de la partie mobile par rapport à la partie fixe. Dans le cas des grues à tour, la connaissance de la position de la partie supérieure de la grue qui comprend une flèche permet de prévenir d'éventuelles collisions de flèches entre deux grues d'un même chantier.

Dans ce but, on connaît l'utilisation de codeurs équipés de pignons qui engrènent sur la denture du roulement d'orientation ou sur une denture séparée. On peut également utiliser des détecteurs de proximité inductifs sur les dents de la denture, ou encore des résolveurs de grand diamètre. Toutefois, ces différents systèmes, soit s'usent rapidement et occasionnent des erreurs de mesure dues aux jeux de fonctionnement et au vieillissement du matériel, soit sont onéreux, délicats à régler, encombrants et nécessitent des interfaces complexes.

EP-A-320 322, relatif à un roulement de petit diamètre, décrit un capteur de rotation mais ne fait pas état d'un capteur de position.

La présente invention a pour but de remédier aux inconvenients précités, en proposant un roulement d'orientation équipé d'un capteur, compact, prémonté et réglé en usine et ne nécessitant pas d'entretien.

La présente invention a pour objet de proposer un roulement d'orientation équipé d'un capteur intégré audit roulement.

Le roulement d'orientation, selon l'invention, est du type destiné à assurer la rotation d'une structure mobile par rapport à un châssis au moyen d'une couronne dentée. Le roulement comprend une bague tournante et une bague non tournante entre lesquelles sont disposés des éléments roulants. Le roulement d'orientation comprend un moyen capteur de position intégré audit roulement, ledit moyen capteur comprenant un codeur magnétisé pourvu d'un ruban, souple magnétisé à pôles alternés. Un tel capteur est capable de fonctionner dans un environnement rendu difficile par la présence de graisse, d'huile ou de poussière, et est parfaitement adapté à des applications extérieures telles que des engins militaires ou de travaux publics.

Dans un mode de réalisation de l'invention, le moyen capteur comprend au moins un capteur solidaire de l'une des bagues du roulement et un codeur solidaire de l'autre bague et disposé en regard et à faible distance du capteur.

Avantageusement, le capteur est disposé dans un trou traversant prévu dans la bague dont il est solidaire.

Dans un mode de réalisation de l'invention, le ruban souple magnétisé peut comprendre une couche de plastoferrite disposée entre une bande de protection en acier amagnétique et une bande de support.

Dans un mode de réalisation de l'invention, le capteur est disposé radialement par rapport au codeur.

Dans un mode de réalisation de l'invention, le codeur est logé dans une rainure disposée sur une surface cylindrique de la bague dont il est solidaire.

Dans un mode de réalisation de l'invention, le moyen capteur comprend deux capteurs. Le codeur comprenant deux extrémités non jointives, le roulement d'orientation peut comprendre une unité de traitement des informations émises par les capteurs, capable de détecter une information anormale provenant d'un capteur situé en face des extrémités non jointives du codeur.

Dans un mode de réalisation de l'invention, le roulement d'orientation comprend des moyens d'étanchéité définissant entre les deux bagues, un espace clos à l'intérieur duquel sont disposés les éléments roulants et le moyen capteur.

Grâce à l'invention, le roulement d'orientation à capteur intégré ne nécessite aucun entretien et n'est pas sujet aux erreurs de mesure dues aux jeux des mécanismes tels que des engrenages ou aux tolérances de fabrication de ces mêmes composants.

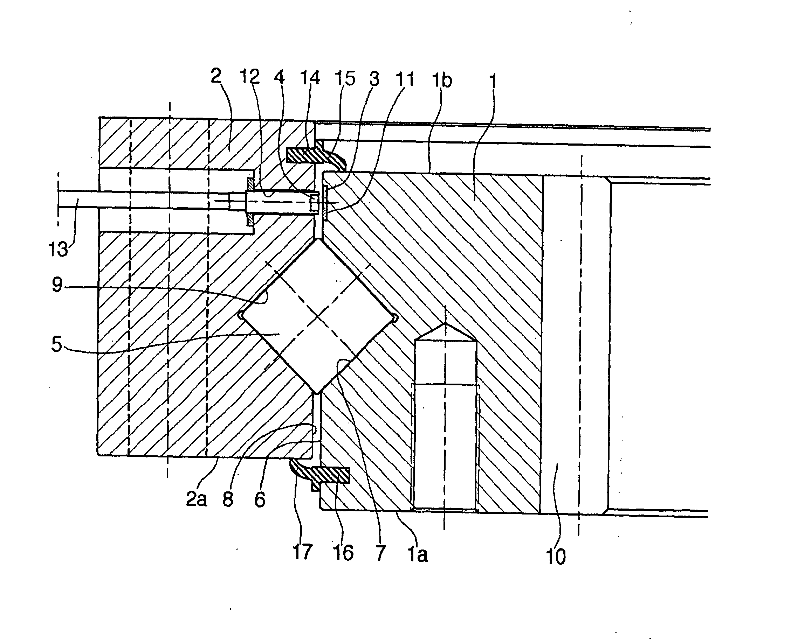

L'invention sera mieux comprise et d'autres avantages apparaîtront à la description détaillée d'un mode de réalisation pris à titre nullement limitatif et illustré par le dessin annexé, sur lequel la figure unique est une vue partielle en coupe, selon un plan passant par son axe, du roulement d'orientation selon l'invention.

Comme on peut le voir sur la figure unique, le roulement d'orientation d'axe vertical comprend une bague intérieure 1, une bague extérieure 2, un codeur 3, au moins un capteur 4 et une rangée d'éléments roulants 5. La bague intérieure 1 comprend une surface cylindrique extérieure 6 sur laquelle est prévu un chemin de roulement 7 et la bague extérieure 2 comprend un alésage 8 sur lequel est prévu un chemin de roulement 9. Les éléments roulants 5 sont disposés entre le chemin de roulement 7 de la bague intérieure 1 et le chemin de roulement 9 de la bague extérieure 2.

La bague intérieure 1 est destinée à être fixée à un châssis ou à une structure (non représentée) munie d'une couronne dentée pour assurer la rotation, et comprend une rainure de fixation 10. La surface cylindrique extérieure 6 de la bague intérieure 1 est limitée, d'un côté, par la surface radiale la et, de l'autre côté, par la surface radiale 1b. Une rainure annulaire 11 est disposée sur la surface cylindrique extérieure 6 de la bague intérieure 1, axialement entre les éléments roulants 5 et la surface radiale 1b. La rainure 11 est de largeur nettement supérieure à sa profondeur et est pourvue de bords radiaux. La rainure 11 est destinée à recevoir le codeur 3 qui sera décrit plus loin.

La bague extérieure 2 est percée d'un trou traversant 12 radial, dans lequel est disposé le capteur 4 de façon qu'il se trouve disposé radialement en face du codeur 3. Le capteur 4 fait légèrement saillie radialement vers l'intérieur du roulement par rapport à l'alésage 8 de la bague extérieure 2, pour définir un entrefer déterminé entre le capteur 4 et le codeur 3.

Le capteur 4 est relié par un câble 13 à des moyens de traitement de l'information, tels qu'un boîtier électronique non représenté.

La bague extérieure 2 comprend, sur son alésage 8, à proximité du capteur 4, une rainure 14 dans laquelle est disposé un joint d'étanchéité 15 qui fait saillie radialement vers l'intérieur du roulement et vient en contact de frottement avec la surface radiale 1b de la bague intérieure 1. La bague intérieure 1 comprend, de même, sur sa surface cylindrique extérieure 6, axialement à l'opposé du codeur 3, une rainure annulaire 16 dans laquelle est disposé un joint d'étanchéité 17 qui fait saillie radialement vers l'extérieur du roulement et vient en contact de frottement avec la surface radiale 2a de la bague extérieure 2. Ainsi, entre les bagues intérieure 1 et extérieure 2 et les joints d'étanchéité 15 et 17, est défini un espace clos dans lequel sont logés le codeur 3, le capteur 4 et les éléments roulants 5 qui sont ainsi protégés contre d'éventuelles pollutions par de la graisse, de la poussière ou de l'eau.

Le codeur 3 comprend un ruban linéaire souple dont la longueur correspond à la circonférence de la rainure 11 de la bague intérieure 1 dans laquelle il est logé. Le codeur 3 est du type magnétique polarisé avec des pôles nord et des pôles sud en alternance. Le capteur 4 est capable de détecter le champ magnétique créé par le codeur 3. Ainsi, le déplacement relatif du codeur 3 par rapport au capteur 4 se traduit par une variation de tension qui est envoyée par l'intermédiaire du câble 13 à un système électronique non représenté qui est capable de mesurer le déplacement linéaire relatif des deux bagues 1 et 2 et d'en connaître le sens. Ces informations de position ou de vitesse angulaire peuvent ensuite être exploitées et envoyées à un afficheur ou à un automate. La connaissance de la longueur totale de la circonférence de la bague intérieure 1 permet de transformer la mesure linéaire en mesure angulaire à l'aide d'un logiciel de calcul approprié intégré au système électronique.

Le codeur 3 sous la forme d'un ruban magnétique comprend une première bande de support qui est en contact avec le fond de la rainure 11, et qui est réalisée en acier inoxydable magnétisé. Cette bande de support est recouverte d'une bande synthétique magnétisée, en plastoferrite, collée sur la bande de support. A des fins de protection, la bande synthétique magnétisée peut être recouverte d'une bande extérieure en acier amagnétique. Cette bande extérieure permet de protéger les autres bandes contre d'éventuels dommages mécaniques. Le codeur 3 est fixé dans la rainure 11 par collage après découpe à la bonne longueur. Toutefois, il peut subsister une faible zone de la rainure 11, de l'ordre de 1 à 2 mm, qui n'est pas équipée de codeur dans la mesure où il est extrêmement difficile de rendre jointives les deux extrémités du ruban. La découpe du codeur 3 est effectuée sans repérage des pôles, par exemple au milieu d'un pôle Nord ou sur le bord d'un pôle Sud. De ce fait, on ne sait pas si l'alternance et les dimensions des pôles sont respectées. Ainsi, dans la zone dépourvue de codeur et à proximité, aucune mesure fiable n'est possible et le passage du capteur 4 dans cette zone risque de mettre la détection de position en défaut.

Pour remédier à ce problème, on peut équiper la bague extérieure 2 de deux capteurs 4 disposés chacun dans un trou radial 12. Ainsi, quelle que soit la position angulaire relative des bagues 1 et 2, au moins un des deux capteurs 4 se trouvera en face d'une portion de la rainure 11 équipée du codeur 3. On adapte alors le système électronique de façon qu'il soit capable de reconnaître une information anormale en provenance de l'un des capteurs 4 due à son passage près de la zone de la rainure 11 dépourvue de codeur 3 ou à proximité des extrémités du codeur 3, et de ne pas tenir compte de cette information anormale afin de se baser uniquement sur l'information en provenance de l'autre codeur 4, lequel se trouve en face d'une portion du codeur 3. De plus, le fait d'équiper la bague extérieure 2 avec deux capteurs 4 permet d'augmenter la précision de détection. Avec un roulement à capteur unique, l'erreur de mesure est de l'ordre de la dimension d'un pôle nord ou sud du codeur 3. Avec un roulement à deux capteurs, l'erreur peut devenir inférieure à cette valeur. Un autre avantage du roulement à deux capteurs 4 est de disposer d'un système redondant à très grande sécurité. Une double redondance peut même être réalisée en installant un troisième capteur.

Grâce à l'invention, le capteur de position est entièrement intégré à l'intérieur du roulement et ne risque plus d'être détérioré par un choc extérieur ou de voir sa précision diminuer en raison de l'usure de la denture du roulement d'orientation. De plus, l'assemblage final de l'ensemble auquel est destiné le roulement d'orientation est simplifié, celui-ci étant déjà équipé de son capteur de position.

## Revendications

1. Roulement d'orientation du type destiné à assurer la rotation d'une structure mobile par rapport à un châssis au moyen d'une couronne dentée, comprenant une bague tournante (2) et une bague non tournante (1) entre lesquelles sont disposés des éléments roulants (5), **caractérisé par le fait qu'**il comprend un moyen capteur de position intégré audit roulement, ledit moyen capteur comprenant un codeur magnétisé (3) *pourvu d'un ruban souple magnétisé à pôles alternés*.

2. Roulement d'orientation selon la revendication 1, **caractérisé par le fait que** le moyen capteur comprend au moins un capteur (4) solidaire de l'une des bagues, le codeur (3) étant solidaire de l'autre bague et disposé en regard et à faible distance du capteur.

3. Roulement d'orientation selon la revendication 2, **caractérisé par le fait que** le capteur (4) est disposé dans un trou (12) traversant prévu dans la bague dont il est solidaire.

4. Roulement d'orientation selon *l'une quelconque des revendications précédentes,* **caractérisé par le fait que** le ruban comprend une couche de plastoferrite disposée entre une bande de protection en acier amagnétique et une bande de support.

5. Roulement d'orientation selon l'une quelconque des revendications 2 à 4, **caractérisé par le fait que** le capteur est disposé radialement par rapport au codeur.

6. Roulement d'orientation selon l'une quelconque des revendications 2 à 5, **caractérisé par le fait que** le codeur (3) est logé dans une rainure (11) disposée sur une surface cylindrique (6) de la bague dont il est solidaire.

7. Roulement d'orientation selon l'une quelconque des revendications *précédentes*, **caractérisé par le fait que** le moyen capteur comprend deux capteurs.

8. Roulement d'orientation selon la revendication 7, **caractérisé par le fait que**, le codeur comprenant deux extrémités non jointives, le roulement comprend une unité de traitement des informations émises par les capteurs, capable de détecter une information anormale provenant d'un capteur situé en face des extrémités non jointives du codeur.

9. Roulement d'orientation selon l'une quelconque des revendications précédentes, **caractérisé par le fait qu'**il comprend des moyens d'étanchéité (15, 17) définissant entre les deux bagues (1, 2) un espace clos à l'intérieur duquel sont disposés les éléments roulants (5) et le moyen capteur.

## Patentansprüche

1. Schwenklager vom Typ, der dazu bestimmt ist, die Rotation einer beweglichen Struktur hinsichtlich einer Fassung mittels eines Zahnkranzes mit einem drehenden Ring (2) und einem nicht drehenden Ring (1) zu gewährleisten, zwischen welchen wälzender Elemente (5) angeordnet sind, **dadurch gekennzeichnet, dass** es ein in dem Lager eingebaute Positionsfühlungsmittel umfasst, wobei das besagte Fühlungsmittel einen magnetisierten Kodierer (3) umfasst, welcher mit einem biegsamen magnetisierten Band mit Wechselpolen versehen ist.

2. Schwenklager nach Anspruch 1, **dadurch gekennzeichnet, dass** das Fühlungsmittel mindestens einen Fühler (4) umfasst, welcher mit einem der Ringe formschlüssig verbunden ist, wobei der Kodierer (3) mit dem anderen Ring formschlüssig verbunden ist und gegenüber und nah am Fühler angeordnet ist.

3. Schwenklager nach Anspruch 2, **dadurch gekennzeichnet, dass** der Fühler (4) in einem durchquerenden Loch (12) in dem Ring, mit dem er formschlüssig verbunden ist, angeordnet ist.

4. Schwenklager nach einem der vorangehenden Patentansprüche, **dadurch gekennzeichnet, dass** das band eine Schicht aus Plastoferrit umfasst, welche zwischen einem Schutzband aus nicht magnetischem Stahl und einem Trägerband angeordnet ist.

5. Schwenklager nach einem der Ansprüche 2 bis 4, **dadurch gekennzeichnet, dass** der Fühler hinsichtlich des Kodierers radial angeordnet ist.

6. Schwenklager nach einem der Ansprüche 2 bis 5, **dadurch gekennzeichnet, dass** der Kodierer (3) in einer Rille (11) aufgenommen ist, welche auf einer zylindrischen Oberfläche (6) des Ringes, mit dem er formschlüssig verbunden ist, angeordnet ist.

7. Schwenklager nach einem der vorangehenden Ansprüche, **dadurch gekennzeichnet, dass** das Fühlungsmittel zwei Fühler umfasst.

8. Schwenklager nach Anspruch 7, **dadurch gekennzeichnet, dass**, während der Kodierer zwei nicht aneinandersto_ende Enden umfasst, das Lager eine Verarbeitungseinheit für die von den Fühlern gesendete Informationen umfasst, welche eine anormale Information von einem Fühler, der sich gegenüber von den nicht aneinandersto_enden Enden des Kodierers befindet, erfassen kann.

9. Schwenklager nach einem der vorangehenden Ansprüche, **dadurch gekennzeichnet, dass** es Dichtungsmittel (15, 17) umfasst, welche zwischen den beiden Ringen (1, 2) einen geschlossenen Raum bestimmen, in welchem die wälzenden Elemente (5) und das Fühlungsmittel angeordnet sind.

## Claims

1. Orientation bearing of the type intended to provide the rotation of a structure that is mobile relative to a frame by means of an annular gear, including a rotating bush (2) and a non-rotating bush (1) between which are placed rolling elements (5), **characterised in that** it includes a position sensing means integrated with said bearing, said sensing means including a magnetised encoder (3) provided with a magnetised flexible tape with alternating polarity.

2. Orientation bearing according to claim 1, **characterised in that** the sensing means includes at least one sensor (4) integral with one of the bushes, the encoder (3) being integral with the other bush and placed opposite to and at a small distance from the sensor.

3. Orientation bearing according to claim 2, **characterised in that** the sensor (4) is placed in a through hole (12) provided in the bush with which it is integral.

4. Orientation bearing according to any one of the previous claims, **characterised in that** the tape includes a layer of plastoferrite placed between a protective strip of non-magnetic steel and a support strip.

5. Orientation bearing according to any one of claims 2 to 4, **characterised in that** the sensor is placed radially relative to the encoder.

6. Orientation bearing according to any one of claims 2 to 5, **characterised in that** the encoder (3) is housed in a groove (11) placed on a cylindrical surface (6) of the bush with which it is integral.

7. Orientation bearing according to any one of the previous claims, **characterised in that** the sensing means includes two sensors.

8. Orientation bearing according to claim 7, **characterised in that**, since the encoder includes two non-contiguous ends, the bearing includes a unit for processing information transmitted by the sensors, that is able to detect abnormal information coming from a sensor located opposite the non-contiguous ends of the encoder.

9. Orientation bearing according to any one of the previous claims, **characterised in that** it includes sealing means (15, 17) defining between the two bushes (1, 2) an enclosed space within which the rolling elements (5) and the sensing means are placed.
